# EUROPÄISCHE PATENTSCHRIFT

(11) **EP 0 425 873 B1**
(45) Veröffentlichungstag und Bekanntmachung des Hinweises auf die Patenterteilung: **04.06.1997**
(21) Anmeldenummer: 90119666.7
(22) Anmeldetag: 13.10.1990
(51) Int. Cl.: E21B 43/26

(54) **Verwendung kohlenwasserstoffreicher Gele als Fracturing-Flüssigkeiten**
Use of high hydrocarbon containing gels as fracturation fluid
Utilisation de gèles riches en hydrocarbures comme fluide de fracturation

(30) Priorität: 28.10.1989 DE 3935999
(43) Veröffentlichungstag der Anmeldung: 08.05.1991
(73) Patentinhaber: HOECHST AKTIENGESELLSCHAFT, 65926 Frankfurt am Main (DE)
(72) Erfinder: Engelhardt, Fritz, Dr., W-6000 Frankfurt am Main 61 (DE); Ebert, Gerlinde, Dr., W-6072 Dreieich/Offenthal (DE)

(56) Entgegenhaltungen:
- GB-A- 1 439 735
- US-A- 3 603 400

## Beschreibung

Zur Verbesserung der Ausbeute an Erdöl und Erdgas bei der Förderung aus Erdöl- und Erdgaslagerstätten gewinnt die Technologie des sogenannten hydraulischen Fracturing zunehmend an Bedeutung.

Fracturing-Behandlungen werden von der Fördersonde aus durchgeführt, wobei die grundlegenden Merkmale dieses Prozesses darin bestehen, daß viskoelastische Flüssigkeiten, die entweder öl- oder wasserlöslich sein können, unter hohem Druck, gegebenenfalls unter Zusatz sogenannter Stützmittel, eingepreßt werden, wobei die öl- bzw. gasführende Formation aufgerissen wird (Fracturing). Dabei wird die viskoelastische Flüssigkeit als Träger des Stützmittels in die entstandenen Risse eingepreßt und dadurch die Permeabilität des Lagerstättengesteins erhöht.

Einen Überblick über Fracturing-Flüssigkeiten des Standes der Technik ist beispielsweise in Oil and Gas Journal 1989, Seiten 52 -55 gegeben. Eine Fracturing-Flüssigkeit in Form eines Gels auf Ölbasis, das im wesentlichen aus einer Kohlenwasserstoffflüssigkeit besteht, ist in der DE-2915455 beschrieben.

Nach Austragen der Fracturing-Flüssigkeit werden die gebildeten Risse durch das verbleibende Stützmittel offengehalten, wodurch eine drastische Steigerung des Öl- bzw. Gasflusses zur Fördersonde erreicht werden kann. Ölbasische Frac-Systeme müssen eingesetzt werden, wenn das Lagerstättengestein wasserempfindliche Mineralbestandteile, wie z.B. Tone enthält, welche in Gegenwart von Wasser durch Quellungen zur Trägerschädigung, d.h. Verminderung der Permeabilität führen können.

Unter einem kohlenwasserstoffreichen Gel versteht man ein System, das aus von Tensid gebildeten Polyedern besteht, die mit Kohlenwasserstoff gefüllt sind, wobei in den schmalen Zwischenräumen zwischen den Polyedern Wasser eine kontinuierliche Phase bildet. Systeme dieser Art sind bekannt und in Angew. Chem. 100 933 (1988) und Ber. Bunsenges. Phys. Chem. 92 1158 (1988) beschrieben.

Fracturing-Flüssigkeiten, die neben Kohlenwasserstoff, Tensid und Wasser auch Kieselgel (fume silica) einer bestimmten Oberfläche und einer bestimmten Teilchengröße enthalten, sind in GB-A 1 439 735 beschrieben.

Es wurde nun überraschenderweise gefunden, daß sich diese kohlenwasserstoffreichen Gele hervorragend als Fracturing-Flüssigkeiten bei der Tertiärförderung von Erdöl und Erdgas eignen.

Die vorliegende Erfindung betrifft demnach die Verwendung von kohlenwasserstoffreichen Gelen, die aus 50 bis 99,5 Gew.% Kohlenwasserstoff, 0,01 bis 15 Gew.% Tensid und 0,49 bis 35 Gew.% Wasser bestehen, wobei das Tensid Polyeder bildet, die mit Kohlenwasserstoff gefüllt sind, und Wasser in den schmalen Zwischenräumen zwischen den Polyedern eine kontinuierliche Phase bildet und wobei die kohlenwasserstoffreichen Gele kein Kieselgel (fume silica) mit einer Oberfläche von 50 bis 400 m²/g und einer Teilchengröße von 7 bis 15 mµ enthalten, als Fracturing-Flüssigkeiten.

Die kohlenwasserstoffreichen Gele bestehen bevorzugt aus 80 bis 99,5 Gew.% Kohlenwasserstoff, 0,01 bis 5 Gew.% Tensid und 0,49 bis 15 Gew.% Wasser.

Besonders bevorzugt bestehen die kohlenwasserstoffreichen Gele aus 85 bis 99,3 Gew.% Kohlenwasserstoff, 0,01 bis 1 Gew.% Tensid und 0,69 bis 14 Gew.% Wasser.

Die kohlenwasserstoffreichen Gele enthalten als Kohlenwasserstoffkomponente beispielsweise gesättigte oder ungesättigte Aliphaten oder Aromaten. Auch Kohlenwasserstoffgemische beliebiger Mischungsverhältnisse sind geeignet.

Bevorzugte Kohlenwasserstoffe sind n-Pentan, n-Hexan, n-Heptan, n-Oktan, n-Nonan, n-Dekan, n-Dodekan, n-Tetradekan, n-Hexadekan, Cyclohexan, Cyclooktan, Benzol, Toluol, Kerosin, Benzin, bleifreies Benzin und Dieselöl.

Die kohlenwasserstoffreichen Gele enthalten als Tensidkomponente bevorzugt Tenside mit einer Kettenlänge des aliphatischen (hydrophoben) Molekülteils von 4 bis 20 Kohlenstoffatomen, wobei die hydrophile Kopfgruppe anionisch, kationisch oder auch nichtionisch sein kann. Besonders bevorzugte Tenside sind die Verbindungen folgender Strukturen: 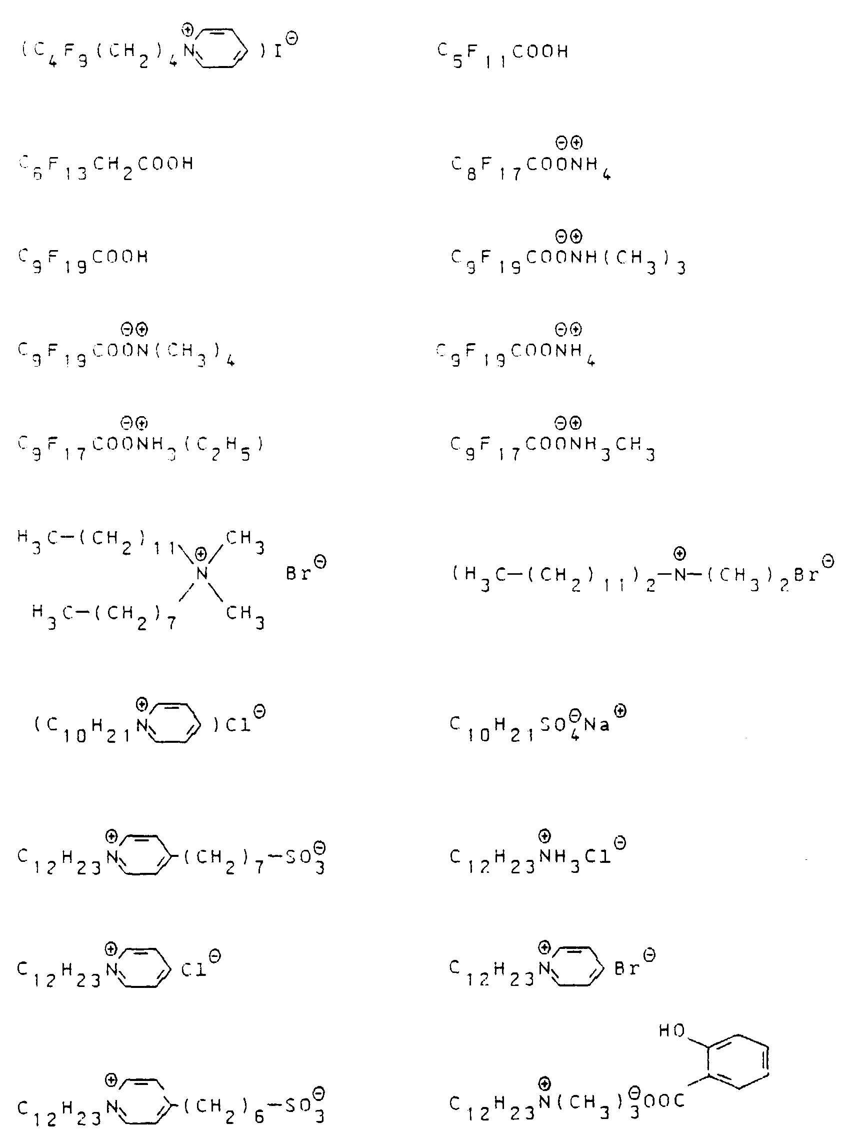 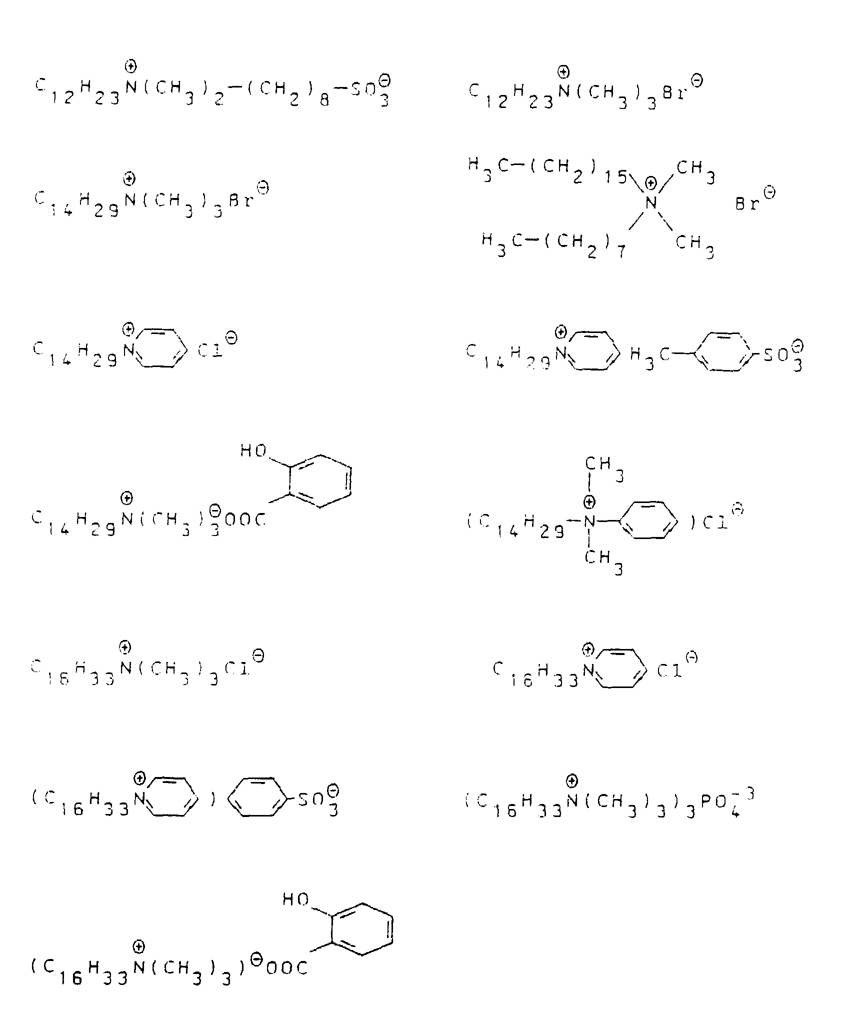 Ganz besonders bevorzugte Tenside sind 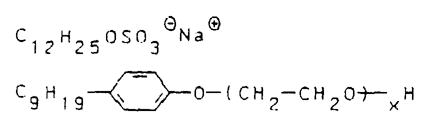 mit x = 8, 9, 10, 11, 13, 15, 23, 30 und

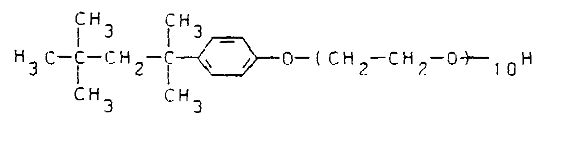

Die als Fracturing-Flüssigkeiten verwendeten kohlenwasserstoffreichen Gele enthalten bevorzugt sogenannte Stützmittel.

Die vorliegende Erfindung betrifft demnach auch Fracturing-Flüssigkeiten, die aus
a) 40 bis 99,9 Gew.% eines kohlenwasserstoffreichen Gels, aus 50 bis 99,9 Gew.% Kohlenwasserstoff, 0,01 bis 15 Gew.% Tensid und 0,49 bis 35 Gew.% Wasser und
b) 0,1 bis 60 Gew.% eines Stützmittels bestehen, wobei es kein Kieselgel (fume silica) mit einer Oberfläche von 50 bis 400 m²/g und einer Teilchengröße von 7 bis 15mµ enthält.
Bevorzugte Fracturing-Flüssigkeiten bestehen zu 45 bis 55 Gew.% aus kohlenwasserstoffreichem Gel und zu 45 bis 55 Gew.% aus Stützmittel. In bevorzugten Fracturing-Flüssigkeiten besteht das kohlenwasserstoffreiche Gel aus 80 bis 99,5 Gew.% Kohlenwasserstoff, 0,01 bis 5 Gew.% Tensid und 0,49 bis 15 Gew.% Wasser.

In besonders bevorzugten Fracturing-Flüssigkeiten besteht das kohlenwasserstoffreiche Gel aus 85 bis 99,3 Gew.% Kohlenwasserstoff, 0,01 bis 1 Gew.% Tensid und 0,69 bis 14 Gew.% Wasser.

Stützmittel sind insbesondere die in der Fördertechnik üblichen und dem Fachmann bekannten Stützmittel. Bevorzugt sind Sand und Bentonite.

Die kohlenstoffreichen Gele können nach dem in Ber. Bunsenges. Phys. Chem. 92 1158 (1988) angegebenen Verfahren hergestellt werden. Die erfindungsgemäßen Fracturing-Flüssigkeiten können durch Vermischen der kohlenwasserstoffreichen Gele mit der entsprechenden Menge des Stützmittels erhalten werden.

Die kohlenwasserstoffreichen Gele bzw. die erfindungsgemäßen Fracturing-Flüssigkeiten eignen sich in hervorragender Weise zum Einsatz bei der Förderung von Erdöl und Erdgas.

Oszillierende Messungen zeigen ein deutliches Überwiegen des elastischen Anteils vor der viskosen Komponente. Die kohlenwasserstoffreichen Gele zeichnen sich durch eine ausreichend hohe, durch die Gelstruktur bedingte Viskosität aus, um die erforderliche Rißbreite für den Transport und die Verteilung des Stützmittels zu erzielen. Die Scherviskosität nimmt erwartungsgemäß mit zunehmender Schergeschwindigkeit stark ab.

Meßtechnisch zu erfassen ist darüber hinaus das Auftreten einer Fließgrenze. Die kohlenwasserstoffreichen Gele gehorchen bei Deformationen bis zu einer bestimmten Grenze dem Hookeschen Gesetzt. Oberhalb dieses Grenzwertes beginnt der Körper zu fließen und weist ab diesem Zeitpunkt Newtonsches Verhalten auf. Grenzwerte dieser Art sind als Fließgrenzen zu verstehen. Dadurch wird ein sauberer und rascher Austrag der abgebauten Fracturing-Flüssigkeiten und ein spontanes Nachfließen des Lagerstättenmediums (Öl, Gas) ermöglicht. Zudem tritt ein weitgehend geringer Reibungswiderstnd bei Pumpen der Systeme durch Leitungen sowie im gebildeten Riß auf. Ebenso werden Verstopfungseffekte bei der Rißbildung vermieden. Entsprechend der Fließkurven aus Elastizitätsmessungen in Abhängigkeit von der Zeit (Spannversuch) weisen die Systeme strukturviskoses Verhalten auf. Es zeigt sich ein Anstieg der Schubspannungswerte mit der Schergeschwindigeit für Bereiche geringer Scherraten, im Anschluß daran ein Plateau-Bereich, in dem die Schubspannung nahezu unabhängig von der Scherbeanspruchung ist. Je nach Zusammensetzung der Systeme wird der dritte Kurvenabschnitt durch einen spontanen Abfall gekennzeichnet, was mit der Zerstörung der Gelstruktur verbunden ist. Fließkurven dieser Art zeigen eine außerordentliche Scherstabilität der Systeme beim Einsatz als Fracturing-Flüssigkeiten an. Rheologische Untersuchungen in Abhängigkeit von der Temperatur zeigen eine außerordentlich gute Thermostabilität der Systeme im Bereich zwischen -20^{o} und 120°C, vorzugsweise im Bereich zwischen 2^{o}C und 80^{o}C. Dies ist ein überraschendes Ergebnis angesichts des hohen Dampfdrucks der Kohlenwasserstoffkomponenten.

Die folgenden Beispiele zeigen besonders geeignete kohlenwasserstoffreiche Gele:

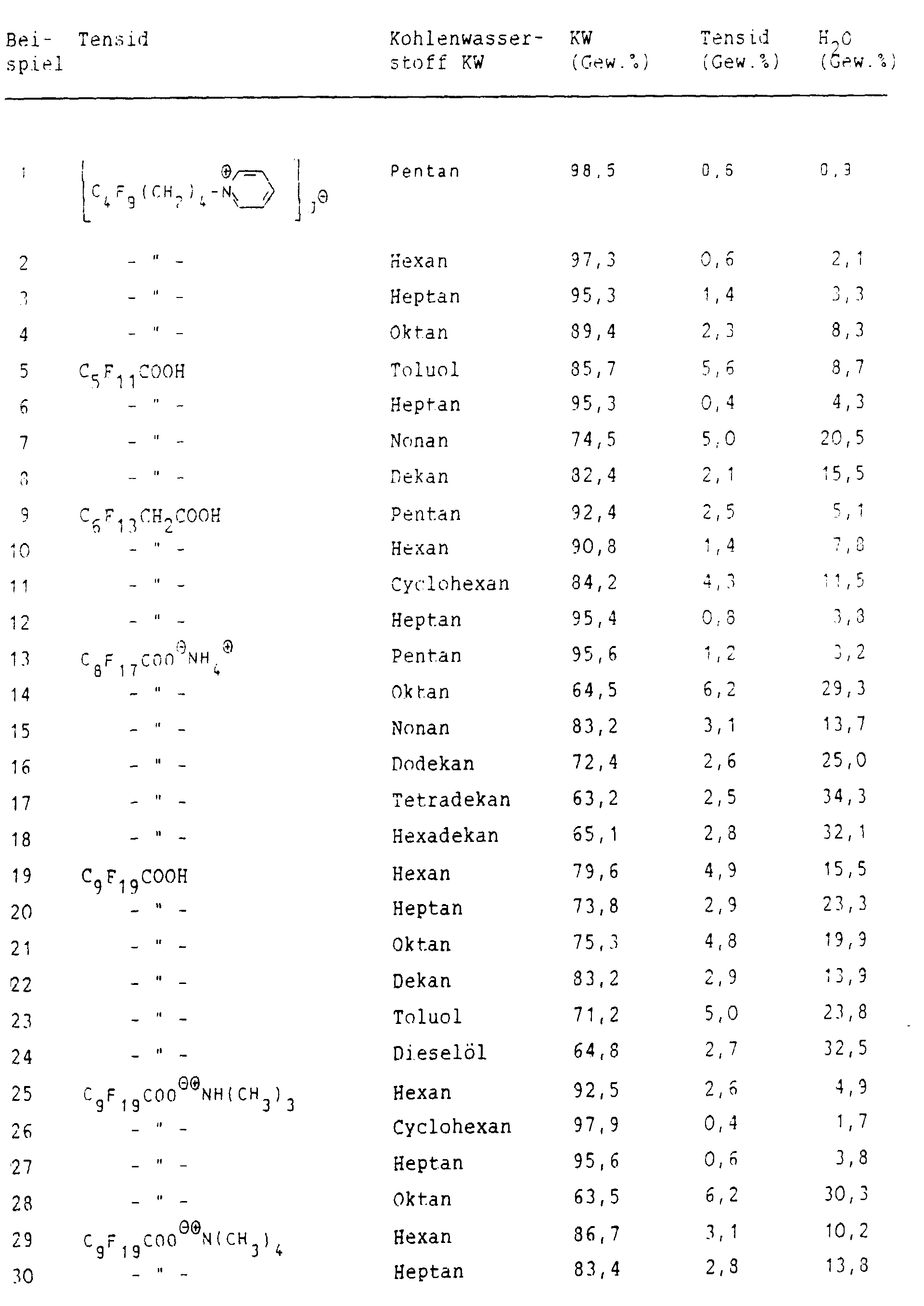

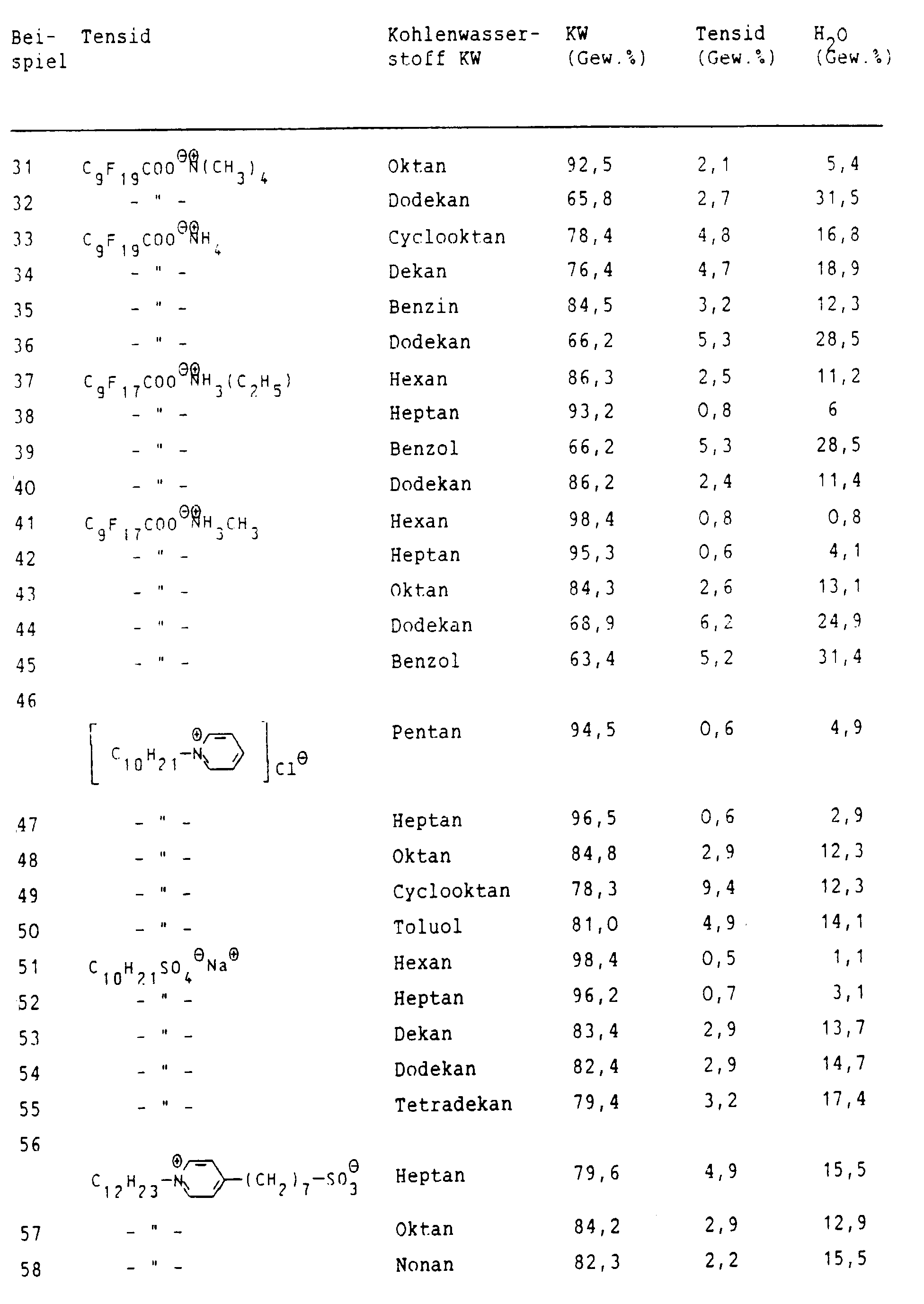

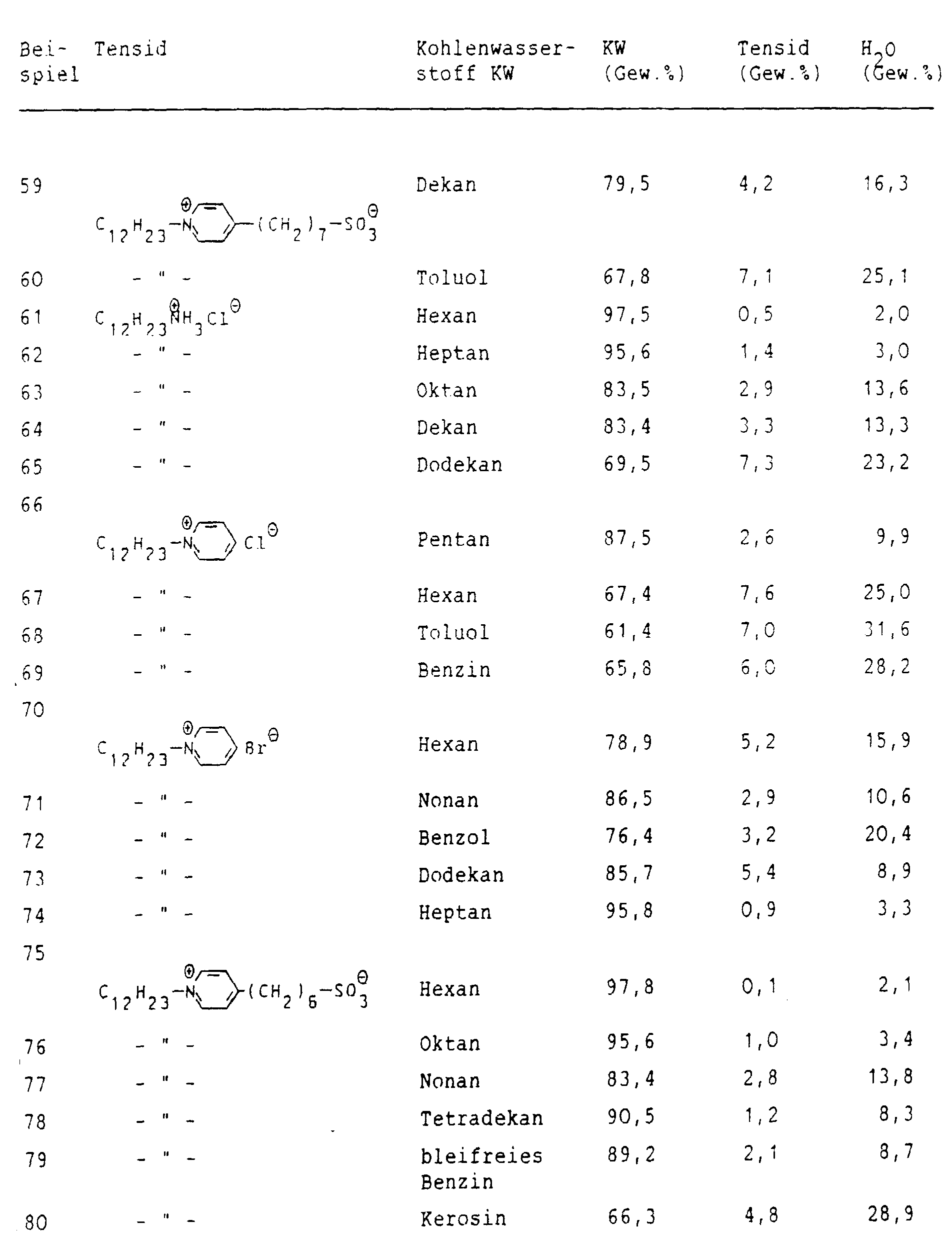

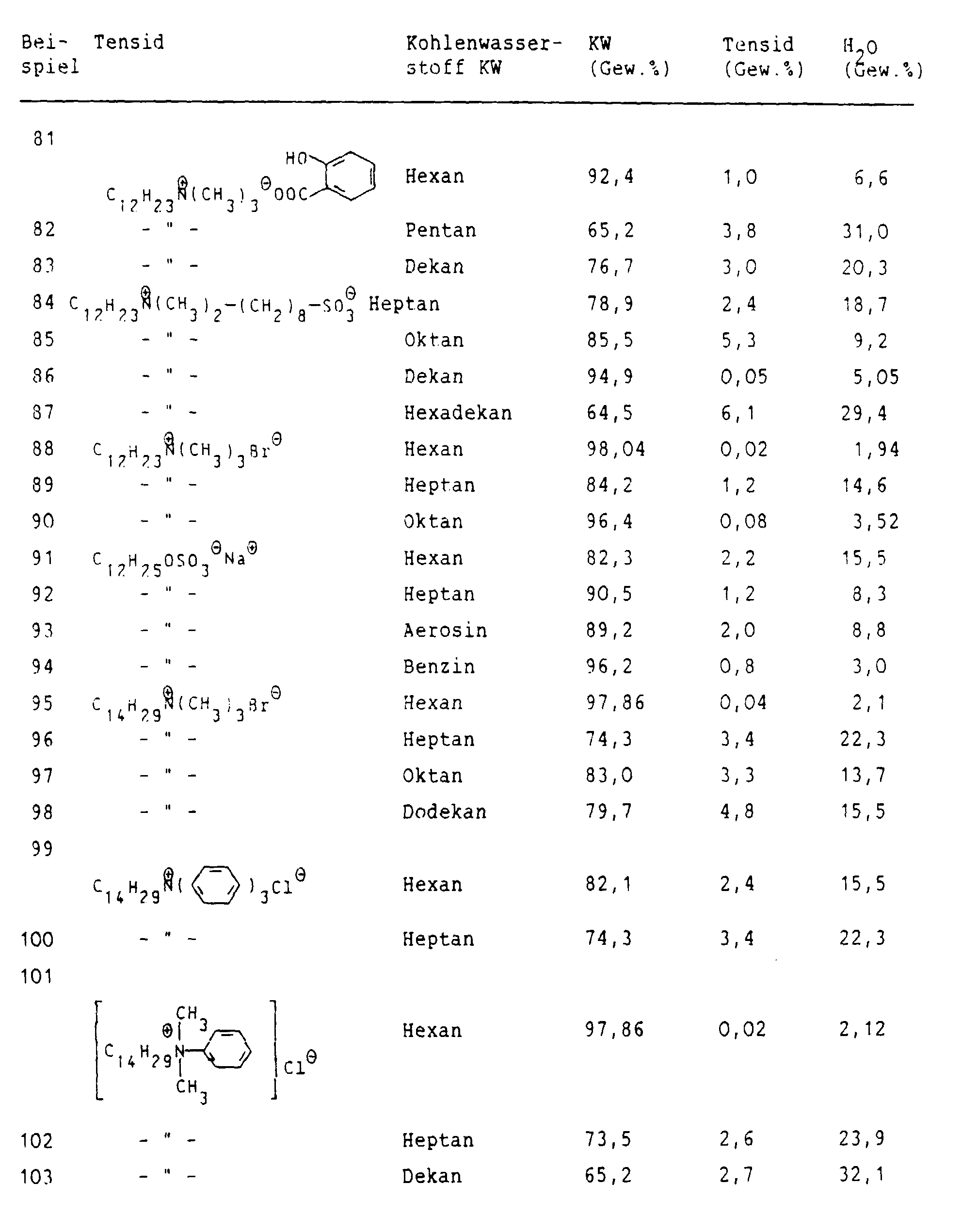

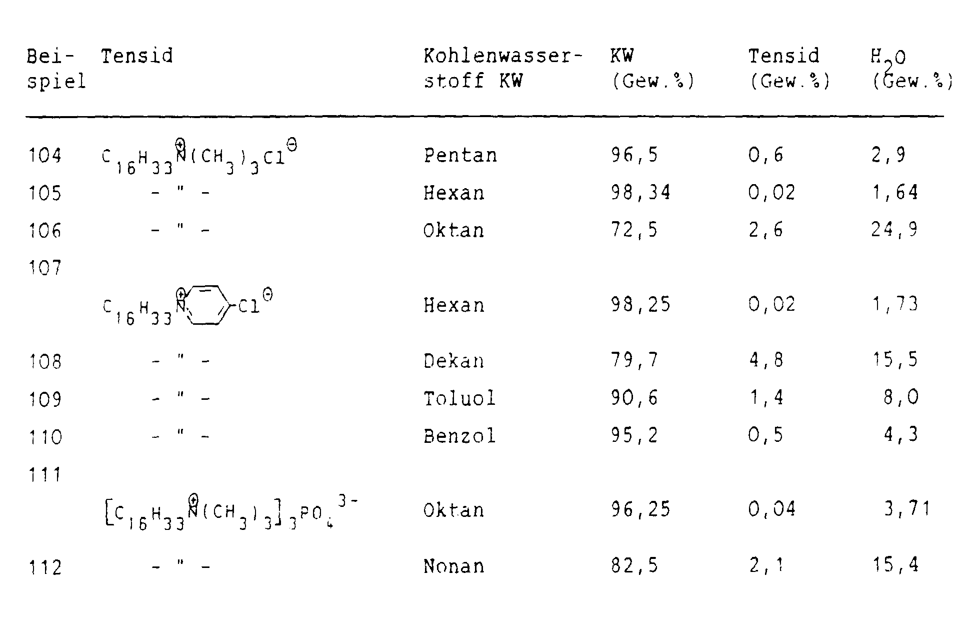

## Patentansprüche

1. Verwendung von kohlenwasserstoffreichen Gelen, die aus 50 bis 99,5 Gew.% Kohlenwasserstoff, 0,01 bis 15 Gew.% Tensid und 0,49 bis 35 Gew.% Wasser bestehen, wobei das Tensid Polyeder bildet, die mit Kohlenwasserstoff gefüllt sind, und Wasser in den schmalen Zwischenräumen zwischen den Polyedern eine kontinuierliche Phase bildet und wobei die kohlenwasserstoffreichen Gele kein Kieselgel (fume silica) mit einer Oberfläche von 50 bis 400 m²/g und einer Teilchengröße von 7 bis 15mµ enthalten, als Fracturing-Flüssigkeiten.

2. Verwendung gemäß Anspruch 1, dadurch gekennzeichnet, daß die kohlenwasserstoffreichen Gele aus 80 bis 99,5 Gew.% Kohlenwasserstoff, 0,01 bis 5 Gew.% Tensid und 0,49 bis 15 Gew.% Wasser bestehen.

3. Verwendung gemäß Anspruch 1 und/oder 2, dadurch gekennzeichnet, daß die kohlenwasserstoffreichen Gele aus 85 bis 99,3 Gew.% Kohlenwasserstoff, 0,01 bis 1 Gew.% Tensid und 0,69 bis 14 Gew.% Wasser bestehen.

4. Verwendung gemäß einem oder mehreren der Ansprüche 1 bis 3, dadurch gekennzeichnet, daß als Kohlenwasserstoff n-Pentan, n-Hexan, n-Heptan, n-Oktan, n-Nonan, n-Dekan, n-Dodekan, n-Tetradekan, n-Hexadekan, Cyclohexan, Cyclooktan, Benzol, Toluol, Kerosin, Benzin, bleifreies Benzin oder Dieselöl eingesetzt wird.

5. Verwendung gemäß einem oder mehreren der Ansprüche 1 bis 4, dadurch gekennzeichnet, daß als Tensid
C₁₂H₂₅OSO₃ ^{⊖}Na^{⊕} 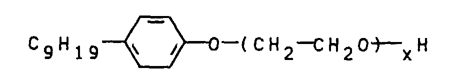
mit x = 8, 9, 10, 11, 13, 15, 23, 30 und 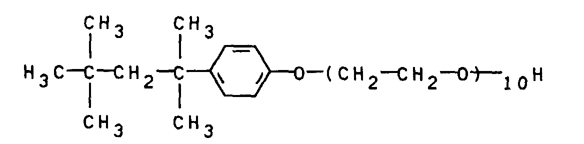 eingesetzt wird.

6. Fracturing-Flüssigkeit, bestehend aus
a) 40 bis 99,9 Gew.% eines kohlenwasserstoffreichen Gels aus 50 bis 99,5 Gew.% Kohlenwasserstoff, 0,01 bis 15 Gew.% Tensid und 0,49 bis 35 Gew.% Wasser, wobei das Tensid Polyeder bildet, die mit Kohlenwasserstoff gefüllt sind, und Wasser in den schmalen Zwischenräumen zwischen den Polyedern eine kontinuierliche Phase bildet und
b) 0,1 bis 60 Gew.% eines Stützmittels,
wobei es kein Kieselgel (fume silica) mit einer Oberfläche von 50 bis 400m²/g und einer Teilchengröße von 7 bis 15 mµ enthält.

7. Fracturing-Flüssigkeit gemäß Anspruch 6, dadurch gekennzeichnet, daß das kohlenwasserstoffreiche Gel aus 80 bis 99,5 Gew.% Kohlenwasserstoff, 0,01 bis 5 Gew.% Tensid und 0,49 bis 15 Gew.% Wasser besteht.

8. Fracturing-Flüssigkeit gemäß Anspruch 6 und/oder 7, dadurch gekennzeichnet, daß das kohlenwasserstoffreiche Gel aus 85 bis 99,3 Gew.% Kohlenwasserstoff, 0,01 bis 1 Gew.% Tensid und 0,69 bis 14 Gew.% Wasser besteht.

9. Fracturing-Flüssigkeit gemäß einem oder mehreren der Ansprüche 6 bis 8, dadurch gekennzeichnet, daß sie aus
a) 45 bis 55 Gew.% eines kohlenwasserstoffreichen Gels und
b) 45 bis 55 Gew.% eines Stützmittels besteht.

10. Fracturing-Flüssigkeit gemäß einem oder mehreren der Ansprüche 6 bis 9, dadurch gekennzeichnet, daß als Stützmittel Sand oder Bentonite eingesetzt werden.

## Claims

1. The use as fracturing liquids of hydrocarbon-rich gels which comprise 50 to 99.5% by weight of hydrocarbon, 0.01 to 15% by weight of surfactant and 0.49 to 35% by weight of water, the surfactant forming polyhedra which are filled with hydrocarbon, and water forming a continuous phase in the narrow interstices between the polyhedra, and where the hydrocarbon-rich gels do not contain fume silica having a surface area of 50 to 400 m²/g and a particle size of 7 to 15 mµ.

2. The use as claimed in claim 1, wherein the hydrocarbon-rich gels comprise 80 to 99.5% by weight of hydrocarbon, 0.01 to 5% by weight of surfactant and 0.49 to 15% by weight of water.

3. The use as claimed in claim 1 and/or 2, wherein the hydrocarbon-rich gels comprise 85 to 99.3% by weight of hydrocarbon, 0.01 to 1% by weight of surfactant and 0.69 to 14% by weight of water.

4. The use as claimed in one or more of claims 1 to 3, wherein the hydrocarbon used is n-pentane, n-hexane, n-heptane, n-octane, n-nonane, n-decane, n-dodecane, n-tetradecane, n-hexadecane, cyclohexane, cyclooctane, benzene, toluene, kerosine, gasoline, unleaded gasoline or diesel oil.

5. The use as claimed in one or more of claims 1 to 4, wherein the surfactant used is
C₁₂H₂₅OSO₃ ^{⊖}Na^{⊕} 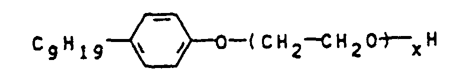
where x = 8, 9, 10, 11, 13, 15, 23, 30 and

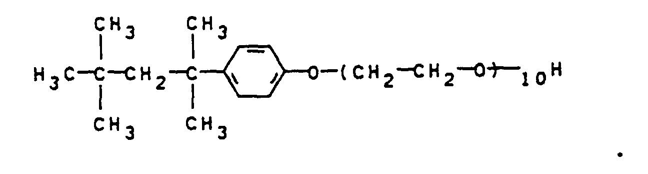

6. A fracturing fluid comprising
a) 40 to 99.9% by weight of a hydrocarbon-rich gel of 50 to 99.5% by weight of hydrocarbon, 0.01 to 15% by weight of surfactant and 0.49 to 35% by weight of water, the surfactant forming polyhedra which are filled with hydrocarbon, and water forming a continuous phase in the narrow interstices between the polyhedra and
b) 0.1 to 60% by weight of a support medium, where the support medium does not contain fume silica having a surface area of 50 to 400 m²/g and a particle size of 7 to 15 mµ.

7. The fracturing fluid as claimed in claim 6, wherein the hydrocarbon-rich gel comprises 80 to 99.5% by weight of hydrocarbon, 0.01 to 5% by weight of surfactant and 0.49 to 15% by weight of water.

8. The fracturing fluid as claimed in claim 6 and/or 7, wherein the hydrocarbon-rich gel comprises 85 to 99.3% by weight of hydrocarbon, 0.01 to 1% by weight of surfactant and 0.69 to 14% by weight of water.

9. The fracturing fluid as claimed in one or more of claims 6 to 8, which comprises
a) 45 to 55% by weight of a hydrocarbon-rich gel and
b) 45 to 55% by weight of a support medium.

10. The fracturing fluid as claimed in one or more of claims 6 to 9, wherein sand or bentonites are used as support medium.

## Revendications

1. Utilisation comme fluides de fracturation de gels riches en hydrocarbures composés de 50 à 99,5% en poids d'hydrocarbure, de 0,01 à 15% en poids d'agent de surface et de 0,49 à 35% en poids d'eau, l'agent de surface formant des polyèdres qui sont remplis d'hydrocarbure et l'eau formant une phase continue entre les interstices étroits entre les polyèdres, lesdits gels riches en hydrocarbures ne contenant pas de gel de silice avec une surface comprise entre 50 et 400 m²/g et une granulométrie comprise entre 7 et 15 mµ.

2. Utilisation selon la revendication 1, caractérisée en ce que les gels riches en hydrocarbures se composent de 80 à 99,5% en poids d'hydrocarbure, de 0,01 à 5% en poids d'agent de surface et de 0,49 à 15% en poids d'eau.

3. Utilisation selon la revendication 1 ou la revendication 2, caractérisée en ce que les gels riches en hydrocarbures se composent de 85 à 99,3% en poids d'hydrocarbure, de 0,01 à 1% en poids d'agent de surface et de 0,69 à 14% en poids d'eau.

4. Utilisation selon l'une ou plusieurs des revendications 1 à 3, caractérisée en ce que l'hydrocarbure utilisé est le n-pentane, le n-hexane, le n-heptane, le n-octane, le n-nonane, le n-décane, le n-dodécane, le n-tétradécane, le n-hexadécane, le cyclohexane, le cyclooctane, le benzène, le toluène, le kérosène, l'essence, l'essence sans plomb ou le gazole.

5. Utilisation selon l'une ou plusieurs des revendications 1 à 4, caractérisée en ce que l'agent de surface utilisé est
C₁₂H₂₅OSO₃ ^{⊖}Na^{⊕} 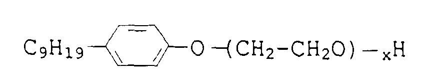
avec x = 8, 9, 10, 11, 13, 15, 23, 30 et

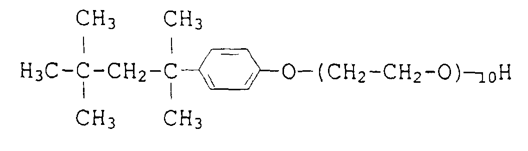

6. Fluide de fracturation composé de
a) de 40 à 99, 9% en poids d'un gel riche en hydrocarbures, de 50 à 99,5% en poids d'hydrocarbure, de 0,01 à 15% en poids d'agent de surface et de 0,49 à 35% en poids d'eau et
b) de 0,1 à 60% en poids d'un agent de soutènement, celui ne contenant pas de gel de silice ayant une surface comprise entre 50 et 400 m²/g et une granulométrie comprise entre 7 et 15 mµ.

7. Fluide de fracturation selon la revendication 6, caractérisé en ce que le gel riche en hydrocarbures se compose de 80 à 99,5% en poids d'hydrocarbure, de 0,01 à 5% en poids d'agent de surface et de 0,49 à 15% en poids d'eau.

8. Fluide de fracturation selon la revendication 6 et/ou la revendication 7, caractérisé en ce que le gel riche en hydrocarbures se compose de 85 à 99,3% en poids d'hydrocarbure, de 0,01 à 1% en poids d'agent de surface et de 0,69 à 14% en poids d'eau.

9. Fluide de fracturation selon l'une ou plusieurs des revendications 6 à 8, caractérisé en ce qu'il se compose de
a) 45 à 55% en poids d'un gel riche en hydrocarbures et
b) 45 à 55% en poids d'un agent de soutènement.

10. Fluide de fracturation selon l'une ou plusieurs des revendications 6 à 9, caractérisé en ce que du sable ou des bentonites sont utilisés comme agents de soutènement.
